# EUROPEAN PATENT SPECIFICATION

(11) **EP 1 179 146 B1**
(45) Date of publication and mention of the grant of the patent: **31.03.2004**
(21) Application number: 99921912.4
(22) Date of filing: 12.05.1999
(51) Int. Cl.: F16F 9/05

(54) **AIRSPRING AND AIRSPRING RETAINER**
LUFTFEDER UND BEFESTIGUNG DAFÜR
RESSORT PNEUMATIQUE ET DISPOSITIF DE RETENUE POUR RESSORT PNEUMATIQUE

(43) Date of publication of application: 13.02.2002
(73) Proprietor: The Goodyear Tire & Rubber Company, Akron, Ohio 44316-0001 (US)
(72) Inventor: ARNOLD, John, Eric, North Canton, OH 44720 (US); TROWBRIDGE, Mark, Guy, Stow, OH 44224 (US)
(74) Representative: Kutsch, Bernd
(86) International application number: PCT/US1999/010422
(87) International publication number: WO 2000/070238

(56) References cited:
- DE-U- 29 615 901
- FR-A- 1 540 178
- GB-A- 830 283
- US-A- 2 950 104
- US-A- 2 988 353
- US-A- 5 201 500
- US-A- 5 535 994

## Description

### Technical Field

This invention relates to air springs according to the preamble of claim 1 and which is known from US patent 55 35 994.

### Background Art

Air springs have been used for motor vehicles and various machines and other equipment for a number of years. The springs provide cushioning between movable parts, primarily to absorb shock loads imparted thereon. The air spring usually consists of a flexible elastomeric reinforced sleeve that extends between a pair of end members, also known as retainers. The sleeve is attached to the end members to form a pressurized chamber therein. The sleeve typically has a relatively inextensible bead core at each end that aids in securing the sleeve to the retainers. Alternatively, the sleeve may be secured to the end plates by crimping means. There may be one or more pistons located within the flexible sleeve. The end members mount the air spring on spaced components or parts of the vehicle or equipment on which the air spring is to be mounted.

The internal pressurized fluid, generally air, absorbs most of the shock impressed upon or experienced by one of the spaced end members on which the air spring is mounted. The end members move inwards and towards each other and also away and outwards from each other upon absorbing the imparted shock.

To prevent the end members from contacting each other during inward movement, many prior art springs have internal bumpers mounted on one of the end members. The bumper extends into the interior of the pressurized chamber. The bumper prevents total collapse or deflection of the spring member in the event of air spring failure, and absorbs shock upon the spring experiencing severe shocks and deflections.

The end members, or upper and lower retainers, are typically formed of stamped metal. The piston, upon which the lower retainer is secured, may be formed from metal or thermoplastic. The bumper is usually formed from thermoplastic or thermoelastic, depending upon the forces which will ultimately be acting on the airspring and the forces to which the bumper will be subjected.

One typical airspring is illustrated in U.S. Patents 5,201,500 (Ecktman et al). The rolling lobe airspring of Ecktman has a bumper that is snap fitted onto the lower retainer. The lower retainer is made of steel, while the bumper is made of a polyester elastomer or plastic.

U.S. Patent 5,535,994 (Safreed, Jr.) discloses another known airspring. The rolling lobe airspring of Safreed discloses a bumper of relatively hard rubber secured to the upper retainer. The bumper contacts the top surface of the piston when the airspring is in use. The airspring of Safreed reduces the airspring weight by modifying the construction of the piston. In reducing the weight of the piston, the bumper-contact surface for the airspring is mounted on the upper retainer.

Several older prior art airsprings disclose the lack of a bumper. For example, U.S. Patent 3,596,895 discloses an airspring wherein the piston assembly comprises a relatively rigid metal piston and a modified bell-shaped piston. The metal piston also serves as the lower retainer and extends from the retainer location to the base of the piston and is secured to the frame upon which the airspring is mounted. The piston can potentially contact the upper retainer plate if the airspring is fully compressed. However, because the piston is formed of metal, the piston greatly increases the weight of the airspring and cannot transmit or absorb much of the impact forces to which it may be subjected.

Bowser, in U.S. Patent 2,950,104 and Bank, in U.S. Patents 3,078,085, disclose lower retainers mounted on airspring pistons. The airsprings are not provided with bumpers; however, the airsprings are engineered to prevent the retainers from contacting the upper retainer. The material and structure of the lower retainer would not allow the lower retainer to transmit or absorb the impact forces if the lower retainer did contact the upper retainer.

The present invention seeks to improve the reduced weight of an airspring even further than that known in the prior art. By reducing the weight load of an airspring, greater efficiency from the system upon which the airspring is mounted can be achieved. If the airspring is used in automotive applications, the vehicle can carry greater payloads before the maximum gross tonnage of the vehicle is achieved. The impact forces acting upon the airspring are absorbed initially by the bumper and then transferred to the retainer and piston. In any reduced weight airspring, the durability, strength, force absorption and transference characteristics, and spring rate characteristics of the airspring must be maintained. The present invention also provides for an airspring that is lower in cost to produce than conventional air springs.

### Summary of the Invention

An object of the present invention is to provide an air spring that has fewer components and provides operating characteristics substantially similar to the prior art airsprings.

The present invention provides an airspring as defined in the claims.

### Brief Description of Drawings

The invention will be described by way of example and with reference to the accompanying drawings in which:
FIG. 1 is a cross-sectional view of an airspring;
FIG. 2 is a cross-sectional view of the airspring piston and lower retainer;
FIG. 3 is a cross-sectional view of the retainer;
FIG. 4 is a view of the top surface of the retainer; and
FIGS. 5 and 6 are embodiments of the retainer.

### Detailed Description of the Invention

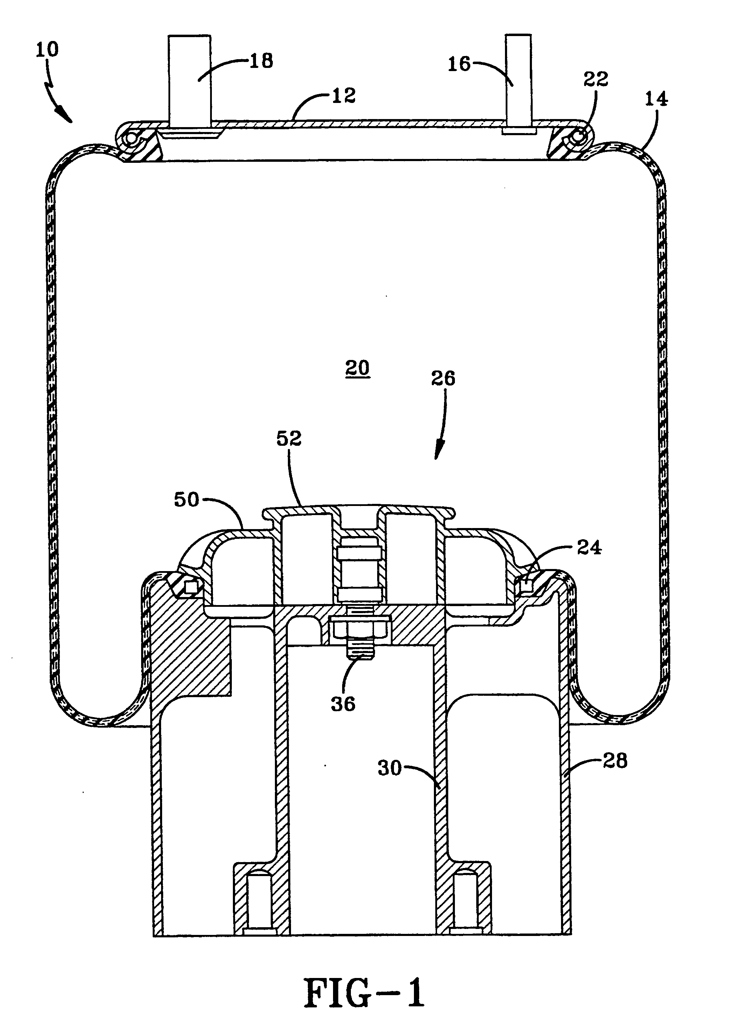

FIG. 1 illustrates an airspring 10 in accordance with the present invention. The airspring 10 has an upper retainer 12 that secures the first end of the elastomeric sleeve 14. The upper retainer 12 has a securing bolt 16 and an air passage 18 to permit the flow of gas into and out of the chamber 20 created by the secured sleeve 14.

The elastomeric sleeve 14 is preferably comprised at least 3 plies: an outer elastomeric ply, at least one reinforcing ply formed of elastomeric embedded reinforcing cords, and an inner elastomeric ply. The upper end of the sleeve 14 has an inextensible bead 22 secured to the upper retainer 12 by crimping the ends of the retainer 12 about the bead 22. Also, where the illustrated securing means at the upper retainer 12 is achieved by crimping, those in the art would readily appreciate that other securing means such as crimping rings may be used. A relatively inextensible bead core 24 also defines the lower end of the airsleeve. The bead cores 22, 24 are at least one continuous winding of wire, preferably steel. The configurations of the upper and lower beads 22,24 may be identical but may differ depending on the airspring retainers 12, 26.

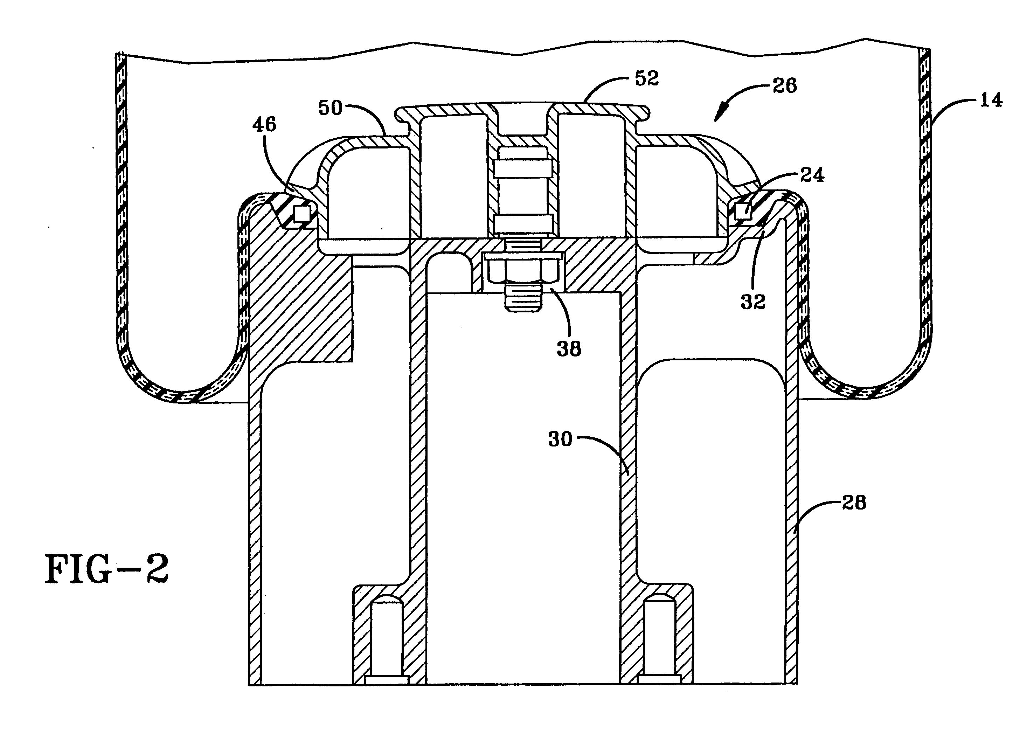

When the airspring 10 is in use, the upper 12 and lower retainers moving axially toward and away from each other, and the sleeve 14 travels up and down the piston 28. The piston 28 is illustrated as a straight sided piston with a central support tube 30. As seen more clearly in Fig 2, the upper portion of the piston 28 is formed in a tiered flange configuration. The upper portion of the outer piston ring slopes inwardly and downwardly to form a first flange 32 upon which the lower airsleeve bead 24 is secured. The flange height is greater than the height of the top of the central supporting ring 30. This height difference assists in forming the chamber 20 within the airspring 10 when the inventive composite retainer 26 is secured to the piston.

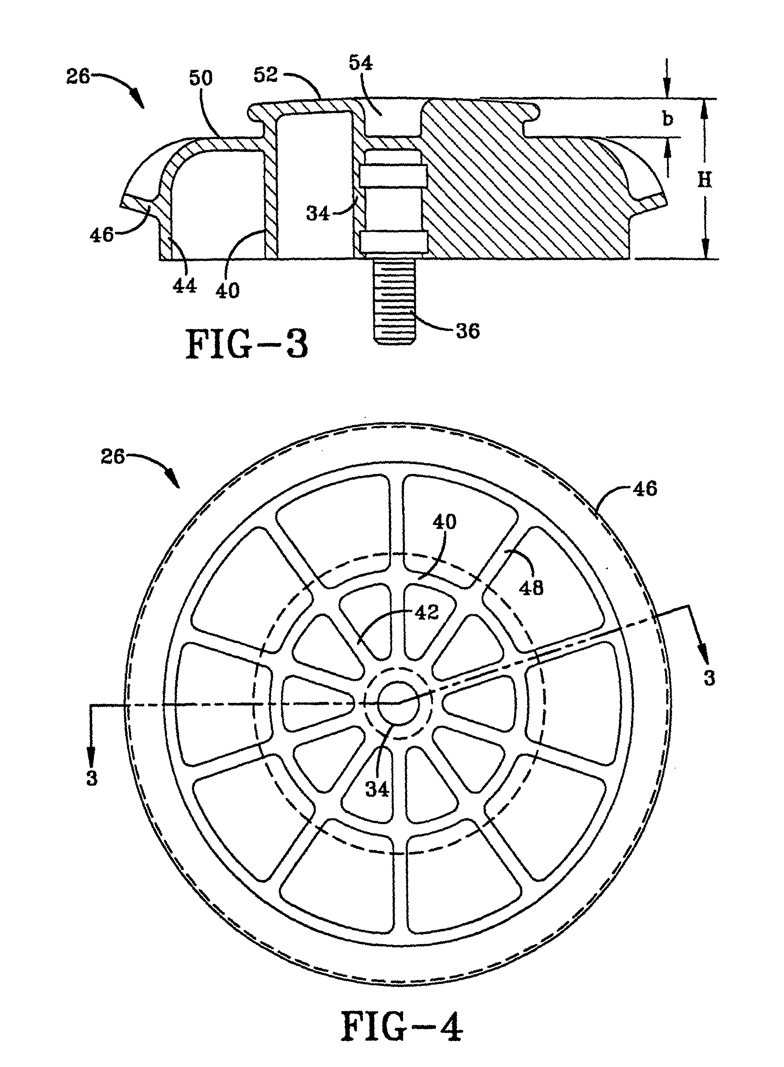

Several embodiments of the inventive composite retainer 26 are illustrated in Figs. 3 to 6. The retainer 26 is a single piece, replacing the conventional separate lower retainer and bumper of the prior art. The retainer 26 has a central support rib 34, within which is an attachment means 36. The attachment means 26 passes through an opening 38 in the piston 28 and concurrently secures the retainer 26 and the lower bead 24 of the sleeve 14 to the piston 28 as discussed further herein.

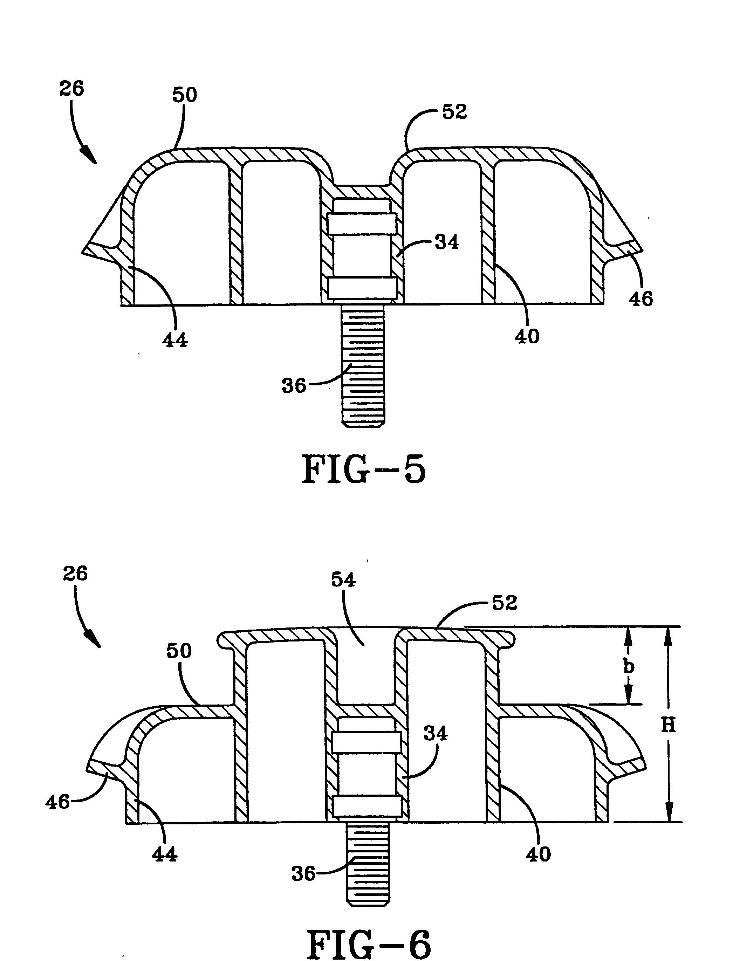

An intermediate concentric support rib 40 is spaced from the central rib 34 and connected to the central rib 34 by a series of radially extending ribs 42, best seen in Fig. 4. Radially outward of the intermediate rib 40 is the outer concentric rib 44. The outer rib 44 is defined by bead retention flange 46. The outer rib 44 is connected to the intermediate rib 40 by a series of radially extending ribs 48 (see Fig 4). The ribs 48 connecting the concentric outer 44 and intermediate 40 ribs may be termed as extensions of the ribs 42 connecting the central rib 34 and the intermediate rib 40. The ribs 48 continue to the outer surface 50 of the retainer 26, linking the bead retention flange 46 to the outer surface 50 of the retainer. The radially extending ribs 42, 48 provide structural support and strength to the retainer 26. The circular ribs 34,40,44 and the radially extending ribs 42,48 allow the forces absorbed by the retainer 26 to be transferred through the retainer 26 to the piston and the rest of the airspring as well as the structure upon which the airspring is mounted.

The retainer 26 has a surface 52 which extends into the chamber 20 created by the secured sleeve 14. The surface 52, also known as the bumper-contact surface, may be flush with the main surface 50 of the retainer 26, as illustrated in FIG. 5, or it may be separated from the surface 50 by a dimension equal to b, see FIGS. 3 and 6. The surface separation dimension b may also be defined as relative to the total axial height H of the retainer 26. The surface separation between the bumper contact surface 52 and the main retainer surface 50 may be considered to be an axial extension of the concentric rib 40. The radially extending ribs 42 will also extend the full depth of the retainer when the dimension b is greater than zero.

The retainer height H is measured from the axially outermost surface, which is the bumper-contact surface 52, to the axially innermost point of the retainer. All of the illustrated retainers are shown having an axially innermost point all corresponding to the same plane; however, if any of the concentric or radially extending ribs of the retainer extend beyond any of the other ribs, the height of the retainer is measured from that portion of the retainer which has the greatest axial length. The dimension b, when expressed relative to the retainer height H, may range from zero to approximately eighty percent (0-80%) of H. In FIG. 3, the surface separation distance b is approximately 25% of the retainer height H. In FIG. 6, the distance b is approximately one-half the retainer height H. For all of the illustrated embodiments of the retainer 26, the central portion 54 of the bumper-contact surface 52 is eliminated to reduce the weight of the retainer 26 and to maintain a uniform ring thickness to assist in molding the retainer 26.
The retainer 26 is formed of a high strength thermoplastic. The tensile strength of the material should be within the range of 1965 to 3165 kg/cm² (28,000 to 45,000 psi), have a flex strength in the range of 2810 to 4220 kg/cm² (40,000 to 60,000 psi), and notched izod strength of 0.117-0.703 N-m/mm (2.0 to 12.0 ft-lb/in). Materials that meet these required characteristics include, but are not limited to, fiberglass reinforced nylon, long fiber reinforced thermoplastic, commercially available as CELSTRAN, and short fiber reinforced thermoplastic, commercially available as ZYTEL.

The airspring 10 is assembled in the following manner. The lower bead core 24 of the sleeve 14 is placed onto the piston flange 32. The retainer 26 is mounted over the beads 24. Attachment means 36 passes into the central opening 38 of the piston 28. As the retainer 26 is secured to the piston, the torquing force exerted compresses the retention flange 46 onto the bead core 24, locking the bead core 24 between the flange 46 and the piston 28. The upper bead core 22 is secured to the upper retainer 12 in any conventional manner. During operation of the airspring 10, when the upper retainer 12 and the lower retainer 26 contact, the impact forces are transmitted through the retainer 26 to the airspring 10 as previously discussed.

## Claims

1. An airspring (10) comprising a flexible cylindrical sleeve (14) secured at opposing ends, a piston (28), and first and second retainers (12, 26), the sleeve being secured at a first end to one of the retainers, and at the opposing end to the other retainer, one of the retainers (26) having an integrally formed bumper-contact surface (52) within the sleeve for axial movement into the sleeve, for contact with the other retainer, and for absorbing and transmittting forces generated from such contact, **characterized in that** the flexible cylindrical sleeve (14) is secured between a retention flange (46) of said one retainer and the upper portion of the piston (28), said upper portion being formed in a tiered flange configuration (32).

2. An airspring (10) in accordance with claim 1 wherein the retainer (26) having an integral bumper-contact surface (52) is comprised of support ribs (34, 40, 42, 44, 48).

3. An airspring (10) in accordance with claim 2 wherein the support ribs are substantially radially extending (42, 48).

4. An airspring (10) in accordance with claim 2 wherein the support ribs are a series of concentrically disposed ribs (34, 40, 44).

5. An airspring (10) in accordance with claim 1 wherein the retainer (26) having an integral bumper-contact surface (52) is defined by a first axially outer surface (52) which extends into the airspring sleeve (14) and a second axially outer surface (50) which extends into the airspring sleeve (14), the axially outermost of the two surfaces being the bumper-contact surface (52) and the axial difference between the two surfaces being greater than zero to separate the two surfaces by a dimension (b).

6. An airspring (10) in accordance with claim 5 wherein the retainer (26) having an integral bumper-contact surface (52) has an axial height (H) as measured from the axially outer most surface (52) to the axially innermost surface, and the surface-separation dimension (b) is 20 to 80% of the retainer height (H).

7. An airspring (10) in accordance with claim 1 wherein the airspring (10) further comprises a piston (28) and the flexible sleeve (14) is comprised of a bead ring (24) at one end, the bead ring (24) being secured between the retainer (26) having an integral bumper-contact surface (52) and the piston (28).

8. An airspring (10) in accordance with claim 1 wherein the retainer (26) having an integral bumper-contact surface (52) is formed from a thermoplastic material having a tensile strength in the range of 1965 to 3165 kg/cm² (28,000 to 45,000 psi), and a flex strength in the range of 2810 to 4220 kg/cm² (40,000 to 60,000 psi).

9. An airspring (10) in accordance with claim 8 wherein the retainer (26) is formed from a material selected from the following group: fiberglass reinforced nylon, long fiber reinforced thermoplastic, and short fiber reinforced thermoplastic.

## Patentansprüche

1. Luftfeder (10), mit einem elastischen zylindrischen Balg (14), der an gegenüberliegenden Enden befestigt ist, einem Kolben (28) und einem ersten sowie einem zweiten Halter (12, 26), wobei der Balg mit einem ersten Ende an einem der Halter und mit dem gegenüberliegenden Ende am anderen Halter befestigt ist, wobei einer der Halter (26) in dem Balg eine integral ausgebildete Pufferkontaktfläche (52) aufweist, die sich in axialer Richtung in den Balg bewegt, der mit dem anderen Halter in Kontakt gelangt und aus einem solchen Kontakt erzeugte Kräfte absorbiert und überträgt,
**dadurch gekennzeichnet,**
**dass** der elastische zylindrische Balg (14) zwischen einer Rückhaltewange (46) des einen Halters und dem oberen Abschnitt des Kolbens (28) befestigt ist, wobei der obere Abschnitt in der Konfiguration einer Wange mit mehreren Ebenen (32) ausgebildet ist.

2. Luftfeder (10) nach Anspruch 1, wobei der Halter (26) mit einer integralen Pufferkontaktfläche (52) Stützrippen (34, 40, 42, 44, 48) umfasst.

3. Luftfeder (10) nach Anspruch 2, wobei die Stützrippen im Wesentlichen radial verlaufende Rippen (42, 48) sind.

4. Luftfeder (10) nach Anspruch 2, wobei die Stützrippen eine Folge von konzentrisch angeordneten Rippen (34, 40, 44) sind.

5. Luftfeder (10) nach Anspruch 1, wobei der Halter (26) mit einer integralen Pufferkontaktfläche (52) durch eine erste axial äußere Oberfläche (52), die sich in den Luftfeder-Balg (14) erstreckt, und eine zweite axial äußere Oberfläche (50), die sich in den Luftfeder-Balg (14) erstreckt, definiert ist, wobei-die axial äußerste der zwei Oberflächen die Pufferkontaktfläche (52) ist und die axiale Differenz zwischen den zwei Oberflächen größer als null ist, um die zwei Oberflächen um ein Maß (b) zu beabstanden.

6. Luftfeder (10) nach Anspruch 5, wobei der Halter (26) mit einer integralen Pufferkontaktfläche (52) eine axiale Höhe (H) besitzt, die von der axial äußersten Oberfläche (52) zur axial innersten Oberfläche gemessen wird, und das Oberflächenabstandsmaß (b) 20 bis 80 % der Halterhöhe (H) beträgt.

7. Luftfeder (10) nach Anspruch 1, die ferner einen Kolben (28) umfasst, wobei der elastische Balg (14) an einem Ende einen Wulstring (24) umfasst, der zwischen dem Halter (26) mit einer integralen Pufferkontaktfläche (52) und dem Kolben (28) befestigt ist.

8. Luftfeder (10) nach Anspruch 1, wobei der Halter (26) mit einer integralen Pufferkontaktfläche (52) aus einem thermoplastischen Material mit einer Zerreißfestigkeit im Bereich von 1965 bis 3165 kg/cm² (28.000 bis 45.000 psi) und einer Biegefestigkeit im Bereich von 2810 bis 4220 kg/cm² (40.000 bis 60.000 psi) gebildet ist.

9. Luftfeder (10) nach Anspruch 8, wobei der Halter (26) aus einem Material gebildet ist, das aus der folgenden Gruppe gewählt ist: glasfaserverstärktes Nylon, langfaserverstärktes Thermoplast und kurzfaserverstärktes Thermoplast.

## Revendications

1. Ressort pneumatique (10) comprenant un manchon cylindrique flexible (14) fixé à ses extrémités opposées, et des premier et deuxième dispositifs de retenue (12, 26), le manchon étant fixé à sa première extrémité à un des dispositifs de retenue et, à son extrémité opposée, à l'autre dispositif de retenue, un des dispositifs de retenue (26) possédant une surface de contact faisant office d'amortisseur et faisant partie intégrante dudit dispositif de retenue, à l'intérieur du manchon pour effectuer un mouvement axial dans ledit manchon, à des fins de mise en contact avec l'autre dispositif de retenue, et dans le but d'absorber et de transmettre les forces générées à partir d'une telle mise en contact, **caractérisé en ce que** le manchon flexible cylindrique (14) est fixé entre une bride de rétention (46) sur ledit premier dispositif de retenue et la portion supérieure du piston (28), ladite portion supérieure possédant une configuration (32) en forme de bride étagée.

2. Ressort pneumatique (10) selon la revendication 1, dans lequel le dispositif de retenue (26) possédant une surface de contact intégrée (52) faisant office d'amortisseur comprend des nervures de support (34, 40, 42, 44, 48).

3. Ressort pneumatique (10) selon la revendication 2, dans lequel les nervures de support s'étendent essentiellement en direction radiale (42, 48).

4. Ressort pneumatique (10) selon la revendication 2, dans lequel les nervures de support représentent une série de nervures disposées en position concentrique (34, 40, 44).

5. Ressort pneumatique (10) selon la revendication 1, dans lequel le dispositif de retenue (26) possédant une surface de contact intégrée (52) est défini par une première surface externe en direction axiale (52) qui s'étend à l'intérieur du manchon (14) du ressort pneumatique et une deuxième surface externe en direction axiale (52) qui s'étend à l'intérieur du manchon (14) du ressort pneumatique, la surface située le plus à l'extérieur en direction axiale parmi les deux surfaces étant la surface de contact faisant office d'amortisseur (52) et la différence axiale entre les deux surfaces étant supérieure à zéro dans le but de séparer les deux surfaces d'une dimension (b).

6. Ressort pneumatique (10) selon la revendication 5, dans lequel le dispositif de retenue (26) possédant une surface de contact intégrée (52) faisant office d'amortisseur possède une hauteur axiale (H) telle qu'on la mesure à partir de la surface (52) située le plus à l'extérieur en direction axiale jusqu'à la surface située le plus à l'intérieur en direction axiale, la dimension (b) de séparation des surfaces représentant de 20 à 80 % de la hauteur (H) du dispositif de retenue.

7. Ressort pneumatique (10) selon la revendication 1, dans lequel le ressort pneumatique (10) comprend en outre un piston (28) et le manchon flexible (14) comprend un anneau de talon (24) à une extrémité, l'anneau de talon (24) étant fixé entre le dispositif de retenue (26) possédant une surface de contact intégrée (52) faisant office d'amortisseur et le piston (28).

8. Ressort pneumatique (10) selon la revendication 1, dans lequel le dispositif de retenue (26) possède une surface de contact intégrée (52) faisant office d'amortisseur réalisée à partir d'une matière thermoplastique possédant une résistance à la traction dans la plage de 1965 à 3165 kg/cm² (28.000 à 45.000 psi) et une résistance à la flexion dans la plage de 2810 à 4220 kg/cm² (40.000 à 60.000 psi).

9. Ressort pneumatique (10) selon la revendication 8, dans lequel le dispositif de retenue (26) est réalisé à partir d'un matériau choisi parmi le groupe ci-après : du nylon renforcé par des fibres de verre, une matière thermoplastique renforcée avec des longues fibres et une matière thermoplastique renforcée avec des courtes fibres.
